# EUROPÄISCHE PATENTSCHRIFT

(11) **EP 2 464 493 B1**
(45) Veröffentlichungstag und Bekanntmachung des Hinweises auf die Patenterteilung: **03.04.2013**
(21) Anmeldenummer: 10744518.1
(22) Anmeldetag: 11.08.2010
(51) Int. Cl.: B24B 13/02, B24B 41/06, B24D 13/14

(54) **POLIERWERKZEUG ZUR FEINBEARBEITUNG VON OPTISCH WIRKSAMEN FLÄCHEN AN INSBESONDERE BRILLENGLÄSERN**
POLISHING TOOL FOR FINISHING OPTICALLY EFFECTIVE SURFACES ON SPECTACLE LENSES IN PARTICULAR
POLISSOIR POUR LA FINITION DE SURFACES OPTIQUEMENT ACTIVES EN PARTICULIER DE VERRES DE LUNETTES

(30) Priorität: 12.08.2009 DE 102009036981
(43) Veröffentlichungstag der Anmeldung: 20.06.2012
(73) Patentinhaber: Satisloh AG, 6340 Baar (CH)
(72) Erfinder: SCHÄFER, Holger, 35789 Weilmünster (DE); WALLENDORF, Steffen, 35582 Wetzlar-Dutenhofen (DE)
(74) Vertreter: Oppermann, Mark
(86) Internationale Anmeldenummer: PCT/EP2010/004898
(87) Internationale Veröffentlichungsnummer: WO 2011/018212

(56) Entgegenhaltungen:
- DE-A1- 10 106 659
- DE-A1- 10 242 422
- DE-A1-102007 026 841

## Beschreibung

### TECHNISCHES GEBIET

Die Erfindung bezieht sich auf ein Polierwerkzeug zur Feinbearbeitung von optisch wirksamen Flächen an insbesondere Brillengläsern, mit einem Grund- oder Trägerkörper, an dessen Außenseite ein Bearbeitungsabschnitt vorgesehen ist, welcher eine im Verhältnis zum Grundkörper weichere Zwischenschicht umfassen kann, der ein Poliermittelträger aufliegt.

### STAND DER TECHNIK

Derartige Polierwerkzeuge kommen insbesondere in der Rezeptfertigung von Brillengläsern in großen Stückzahlen zum Einsatz und sind bereits in unterschiedlichen Ausführungsformen Stand der Technik (siehe z.B. EP-A-1 473 116, DE-A-10 2005 010 583, EP-A-2 014 412). Mit automatischen Poliervorrichtungen werden entweder Einzellinsen oder aber Linsenpaare aus Rezeptkästen vollautomatisch entnommen, poliert, vorgereinigt und danach wieder im Rezeptkasten abgelegt. Beim Poliervorgang passen sich die flexiblen Polierwerkzeuge der Oberfläche der zu polierenden Linse an. Automatisierte Poliermaschinen gehören ebenfalls zum Stand der Technik (siehe z.B. DE-A-102 50 856, DE-A-10 2004 021 721). Werkzeuge, deren Grundkörper verschiedene Krümmungen aufweisen, müssen jeweils entsprechend der Krümmung der Werkstückfläche zugeordnet werden. Die Maschinen besitzen daher Magazine zur Aufnahme dieser unterschiedlichen Werkzeuge.

Um einen automatischen Werkzeugwechsel zu ermöglichen, muss die sogenannte Schnittstelle zwischen Werkzeugspindel und dem Werkzeuggrundkörper so ausgebildet sein, dass sich das Werkzeug leicht auf die Spindel aufsetzen lässt, sich an der Spindel zentriert und mit ihr eine möglichst spielfreie, formschlüssige Verbindung eingeht, die auch die Übertragung höherer Drehmomente erlaubt. Außerdem sollte das Polierwerkzeug mit der Werkzeugspindel verrastet sein, so dass es nicht durch Schwerkrafteinfluss herunterfallen kann. Derartige Schnittstellenlösungen sind bereits Stand der Technik (siehe z.B. DE-A-102 50 856, DE-A-10 2004 062 319, DE-A-101 06 659).

Der DE-A-101 06 659 ist eine eine Polierscheibe tragende Drehachse zu entnehmen. Am Ende der Drehachse ist kardanisch ein Endstück befestigt, auf das die Polierscheibe mit einem Grundkörper aufsteckbar ist. Dazu verfügt der Grundkörper über eine zentrale Vertiefung mit einem umlaufenden Flansch. Das Endstück ist konisch zulaufend ausgebildet, kann in die Vertiefung eintauchen und ist mit einem O-Ring versehen. Beim Aufstecken der Polierscheibe wird der Flansch am Grundkörper über den O-Ring geschoben, so dass der O-Ring sich hinter dem Flansch verhakt. Auf diese Weise wird die Polierscheibe an dem Endstück der Drehachse befestigt. Zur Entnahme wird die Polierscheibe mit einem Ruck abgezogen, wobei der Flansch über den dabei zusammengedrückten O-Ring gezogen wird. Die gesamte Anordnung bildet so einen Schnappverschluss.

Die bekannten Lösungen für die Schnittstelle zwischen Werkzeugspindel und dem Grundkörper des Polierwerkzeugs sind nicht zufriedenstellend, weil sie durch anspritzendes Poliermittel einem hohen Verschleiß ausgesetzt sind. Poliermittel für Kunststoff-Brillengläser bestehen aus einer wässrigen Suspension von feinkörnigem Aluminiumoxid, also aus einem äußerst harten und abrasiven Material. Durch chemische und mechanische Einwirkung des Poliermittels ist daher die Schnittstelle während der Polierbearbeitung einem extremen Verschleiß ausgesetzt. Ihre der Zentrierung, Verrastung und Drehmomentübertragung dienenden Elemente sind daher sehr schnell abgenutzt und erfüllen nicht mehr ihre Funktion, was einen automatischen Werkzeugwechsel mindestens sehr erschwert, wenn nicht sogar unmöglich macht.

### AUFGABENSTELLUNG

Der Erfindung liegt die Aufgabe zugrunde, ein Polierwerkzeug für automatischen Werkzeugwechsel bereitzustellen, dessen Schnittstelle mit der werkzeugspindel bei einfachem und kostengünstigen Aufbau funktionssicher ist und unter Einwirkung des Poliermittels keinem schnellen Verschleiß ausgesetzt ist.

### DARSTELLUNG DER ERFINDUNG

Diese Aufgabe wird durch die im Patentanspruch 1 angegebenen Merkmale gelost. Vorteilhafte und/oder zweckmäßige Weiterbildungen der Erfindung sind in den Patentansprüchen 2 bis 8 angegeben und werden nachstehend ebenfalls näher erläutert.

Erfindungsgemäß umfasst ein Polierwerkzeug zur Feinbearbeitung von optisch wirksamen Flächen an insbesondere Brillengläsern einen Grundkörper, an dessen Außenseite ein Bearbeitungsabschnitt vorgesehen ist und der an seiner Innenseite einen durch eine Wandfläche und eine Grundfläche begrenzten Innenraum aufweist, welcher zum Aufschieben des Polierwerkzeugs auf und Verrasten an einer komplementär ausgebildeten Aufnahme einer Werkzeugspindel vorgesehen ist und an seiner Grundfläche Mitnehmerelemente zur Drehmomentsübertragung besitzt, denen entsprechende Mitnehmergegenelemente an der Aufnahme zugeordnet sind, wobei zwischen der Wandfläche und der Aufnahme ein in einer Ringnut festgelegter Haltering vorgesehen ist, welcher die Verrastung mit einer entsprechenden Gegennut und eine Abdichtung des Innenraums vorsieht, wobei die Verrastung beim Aufschieben eintritt bevor die Mitnehmerelemente mit den Mitnehmergegenelementen in Eingriff gelangen, der erst bei weiterem Aufschieben unter Aufhebung der Verrastung und Abdichtung zwischen der Wandfläche und der Aufnahme erzielbar ist.

Wesentliches Element der Erfindung ist hierbei die Verwendung eines einfach ausgebildeten Halterings und dessen zweifache Funktionszuordnung, nämlich einerseits als Rastelement und andererseits als Dichtelement. Aufgrund der erfindungsgemäßen Anordnung kann das verwendete Poliermittel nicht durch den Spaltraum zwischen der Wandfläche des Innenraums und der Aufnahme der Werkzeugspindel hindurch zu den Mitnehmerelementen und den Mitnehmergegenelementen vordringen, so dass dort kein vom Poliermittel verursachter Verschleiß eintreten kann.

Vorzugsweise sind in einer einfachen Ausgestaltung die an der Grundfläche des Innenraums des Grundkörpers angeordneten Mitnehmerelemente von vier quaderförmigen und in den Abmessungen übereinstimmenden Vorsprüngen gebildet, die bezogen auf eine Mittelachse des Grundkörpers mit gegenseitigen Winkelabständen von 90° und in übereinstimmenden Abständen von der Mittelachse angeordnet sind.

In weiterer bevorzugter Ausgestaltung sind die an der Aufnahme der Werkzeugspindel angeordneten Mitnehmergegenelemente als vier in einer ebenen Stirnfläche der Aufnahme vorgesehene, in radialer Richtung verlaufende Nuten ausgebildet, die bezogen auf eine Mittelachse der Aufnahme mit gegenseitigen Winkelabständen von 90° kreuzförmig angeordnet und dazu bestimmt sind, jeweils einen der vier Vorsprünge des Grundkörpers formschlüssig aufzunehmen, wenn sich Aufnahme und Grundkörper in einer entsprechenden Relativdrehlage zueinander befinden und der Grundkörper einer die Verrastung aufhebenden Axialkraft ausgesetzt ist.

Aufgrund dieser Anordnung und Ausbildung der Mitnehmerelemente und der ihnen komplementär zugeordneten Mitnehmergegenelemente gelangen die Mitnehmerelemente, nachdem beim weiteren Aufschieben des Grundkörpers auf die Aufnahme und Aufhebung der Verrastung die Mitnehmerelemente auf die Stirnfläche der Aufnahme getroffen sind, mit den Mitnehmergegenelementen nach maximal einer viertel, d.h. 90° Relativdrehung in Eingriff.

In weiterer Ausgestaltung der Erfindung ist die zur Festlegung des Halterings vorgesehene Ringnut in der Wandfläche des Innenraums des Grundkörpers angeordnet und von größerer Tiefe als die in der Aufnahme der Werkzeugspindel vorgesehene Gegennut, so dass der Haltering etwas aus der Wandfläche des Innenraums zur dichten Anlage an der Aufnahme nach innen vorsteht. Auf diese Weise verbleibt der Haltering auch nach der Trennung des Grundkörpers von der Aufnahme der Werkzeugspindel im Grundkörper und steht zur Wiederverwendung des Polierwerkzeugs als Rastelement und Abdichtelement zur Verfügung.

In einer vorteilhaften Ausführungsform der Erfindung ist der Grundkörper aus einem thermoplastischen Kunststoff spritzgeformt. Hierbei können die Mitnehmerelemente einteilig an den Grundkörper angeformt sein.

In einer besonders kostengünstigen Ausgestaltung handelt es sich bei dem Haltering um einen O-Ring, wie sie problemlos im Markt verfügbar sind. Als Alternative hierzu kann aber auch ein Haltering zum Einsatz kommen, der einen elastomeren Grundkörper mit einem im Wesentlichen rechteckigen Querschnitt aufweist, welcher spielfrei unter Vorspannung in der im Querschnitt gesehen im Wesentlichen rechteckigen Ringnut sitzt, wodurch eine höhere Sicherheit gegen ein unbeabsichtigtes Herausziehen des Halterings aus der Ringnut gegeben ist. Hierbei kann schließlich der Grundkörper des Halterings an seiner Innenumfangsfläche vorteilhaft mit einem umlaufenden Wulst für den Eingriff in der Gegennut und zur Abdichtung gegenüber der Aufnahme versehen sein.

### KURZE BESCHREIBUNG DER ZEICHNUNGEN

Die Erfindung wird nachfolgend anhand bevorzugter Ausführungsbeispiele unter Bezugnahme auf die beigefügten Zeichnungen näher beschrieben, die gegenüber der Wirklichkeit in einem vergrößerten Maßstab dargestellt sind. In den Zeichnungen zeigt:
- Fig. 1: eine Längsschnittansicht des Polierwerkzeugs, das noch nicht mit der Werkzeugspindel verbunden ist,
- Fig. 2: eine abgebrochene Längsschnittansicht der Werkzeugspindel mit ihrem zur Anbringung des Polierwerkzeugs gemäß Fig. 1 ausgebildeten Ende,
- Fig. 3: der vergrößert dargestellte Ausschnitt entsprechend dem Ausschnittskreis III in Fig. 2,
- Fig. 4: das Polierwerkzeug entsprechend Fig. 1 in einer perspektivischen Ansicht auf die der Werkzeugspindel zugekehrten Seite, zur Veranschaulichung der Werkzeugseite der Schnittstelle zwischen Werkzeug und Werkzeugspindel,
- Fig. 5: die Werkzeugspindel entsprechend Fig. 2 in einer perspektivischen Ansicht auf die dem Werkzeug zugekehrte Seite, zur Veranschaulichung der Spindelseite der Schnittstelle zwischen Werkzeug und Werkzeugspindel,
- Fig. 6: eine Längsschnittansicht des Polierwerkzeugs und der abgebrochen dargestellten Werkzeugspindel in der Verrastungsposition des Werkzeugs mit der Spindel, in welcher die Mitnehmerelemente des Polierwerkzeugs noch nicht mit den Mitnehmergegenelementen der Werkzeugspindel eingreifen,
- Fig. 7: der vergrößert dargestellte Ausschnitt entsprechend dem Ausschnittskreis VII in Fig. 6,
- Fig. 8: eine Längsschnittansicht des Polierwerkzeugs und der abgebrochen dargestellten Werkzeugspindel in der Eingriffsposition des Werkzeugs mit der Spindel, in welcher die Verrastung aufgehoben ist und sich die Mitnehmerelemente des Polierwerkzeugs mit den Mitnehmergegenelementen der Werkzeugspindel im Eingriff befinden,
- Fig. 9: eine abgebrochene, gegenüber dem Maßstab der Fig. 1 vergrößerte Längsschnittansicht des noch nicht mit der Werkzeugspindel verbundenen Polierwerkzeugs in einer Variante des in den Fig. 1, 4, 6, 7 und 8 gezeigten Polierwerkzeugs, bei der anstelle eines O-Rings ein anders geformter Haltering zum Einsatz kommt, und
- Fig. 10: ein der Fig. 7 entsprechender Ausschnitt mit der Polierwerkzeugvariante gemäß Fig. 9.

### DETAILLIERTE BESCHREIBUNG DER AUSFÜHRUNGSBEISPIELE

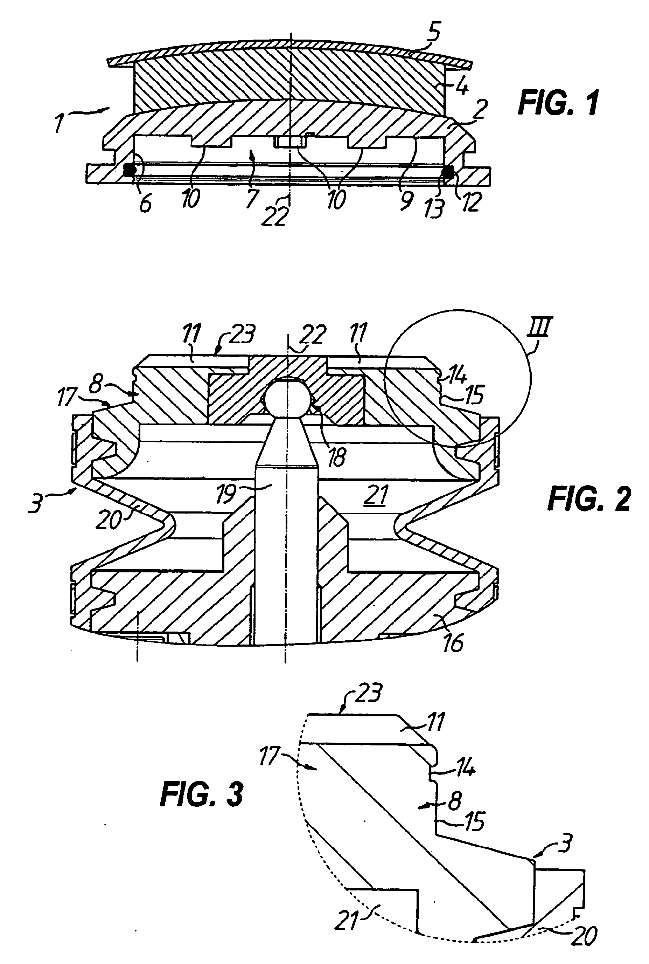

Wie aus den Zeichnungen ersichtlich ist, weist ein flexibles Polierwerkzeug 1 einen rotationssymmetrischen Grundkörper 2 auf, der an der in den Fig. 2, 3, 5 bis 8 und 10 abgebrochen dargestellten Werkzeugspindel 3 einer Bearbeitungsmaschine (nicht weiter gezeigt) auf noch zu beschreibende Weise anbringbar ist. Das Polierwerkzeug 1 dient der Feinbearbeitung von optisch wirksamen Flächen an insbesondere Brillengläsern (nicht dargestellt). An der Außenseite, d.h. der von der Werkzeugspindel 3 abgewandten Seite des Grundkörpers 2 ist ein Bearbeitungsabschnitt vorgesehen, der im dargestellten Ausführungsbeispiel eine am Grundkörper 2 befestigte, im Verhältnis zum Grundkörper 2 weichere Zwischenschicht 4 und einen der Zwischenschicht 4 aufliegenden Poliermittelträger 5 umfasst. Diese Ausbildung des Polierwerkzeugs ist hinreichend bekannt und bedarf daher hier keiner weiteren Erläuterung.

An seiner Innenseite, d.h. an seiner der Werkzeugspindel 3 zugekehrten Seite, weist der Grundkörper 2 einen durch eine zylindrische Wandfläche 6 begrenzten Innenraum 7 auf, welcher zum Aufschieben des Polierwerkzeugs 1 auf und zum Verrasten an einer komplementär ausgebildeten zylindrischen Aufnahme 8 der Werkzeugspindel 3 vorgesehen ist. An einer Grundfläche 9 des Innenraums 7 sind zur Drehmomentübertragung von der Werkzeugspindel 3 auf das Polierwerkzeug 1 noch näher zu beschreibende Mitnehmerelemente 10 angebracht. Den Mitnehmerelementen 10 sind an der zylindrischen Aufnahme 8 vorgesehene und ebenfalls noch näher zu beschreibende Mitnehmergegenelemente 11 zugeordnet.

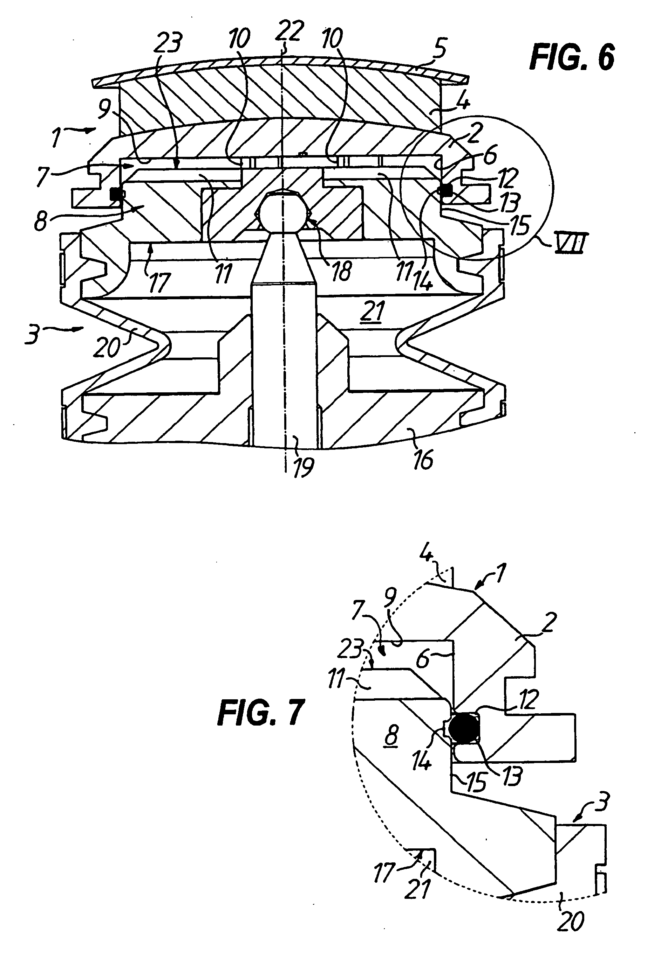

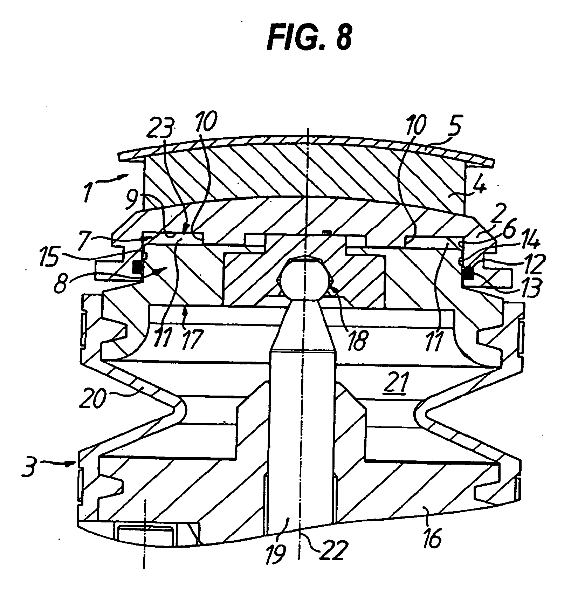

Zwischen der Wandfläche 6 und der Aufnahme 8 ist ein in einer Ringnut 12 festgelegter, elastomerer Haltering 13, hier in der Form eines O-Rings vorgesehen, welcher die Verrastung mit einer entsprechenden Gegennut 14 und die Abdichtung des Innenraums 7 gegen das Eindringen von Poliermittel vorsieht. Die Verrastung tritt beim Aufschieben des Grundkörpers 2 mit seinem Innenraum 7 auf die Aufnahme 8 der Werkzeugspindel 3 ein, sobald sich die Ringnut 12 und die Gegennut 14 gegenüberliegen (siehe die Fig. 6 und 7) und bevor die Mitnehmerelemente 10 mit den Mitnehmergegenelementen 11 in Eingriff gelangen. Wird dann das Polierwerkzeug 1 weiter auf die Aufnahme 8 aufgeschoben, was durch den Poliereingriff des Polierwerkzeugs 1 mit dem zu polierenden Brillenglas (nicht gezeigt) erfolgt, wird die Verrastung aufgehoben und die Mitnehmerelemente 10 gelangen mit den Mitnehmergegenelementen 11 in Eingriff, sobald von der angetriebenen Werkzeugspindel 3 eine Drehmomentsübertragung auf das Polierwerkzeug 1 erfolgt und die Winkellage der Mitnehmerelemente 10 des Werkzeugs 1 nach einer Drehung von maximal 90° mit derjenigen der komplementären Mitnehmergegenelemente 11 übereinstimmt, so dass das Polierwerkzeug 1 rotierend mitgenommen wird (siehe Fig. 8). Bei allen axialen Relativbewegungen zwischen Werkzeug 1 und Spindel 3 sorgt der Haltering 13 für eine Abdichtung zwischen der Wandfläche 6 und der zylindrischen Umfangsfläche 15 der Aufnahme 8.

Wie beispielsweise aus Fig. 2 hervorgeht, sind an der Werkzeugspindel 3 ein Basisteil 16 und ein Gelenkteil 17 vorgesehen. Das Gelenkteil 17 ist bezüglich des Basisteils 16 mittels einer Kugelkopfverbindung 18 und eines stangenförmigen, axial verschiebbar im Basisteil 16 geführten Führungsglieds 19 kipp- und längsbeweglich geführt. An das Gelenkteil 17 schließt sich in Richtung des Basisteils 16 ein Faltenbalg 20 an, mit welchem das Gelenkteil 17 drehfest am Basisteil 16 befestigt ist. Das Basisteil 16, das Gelenkteil 17 und der Faltenbalg 20 begrenzen eine Druckmittelkammer 21, die über einen Kanal (nicht gezeigt) im Führungsglied 19 wahlweise mit einem geeigneten flüssigen oder gasförmigen Druckmittel beaufschlagt werden kann, um während der Bearbeitung der optisch wirksamen Fläche am Brillenglas (nicht dargestellt) über das Gelenkteil 17 auf das darauf aufliegende Polierwerkzeug 1 einen Bearbeitungsdruck aufzubringen. Weitere Einzelheiten zum Aufbau dieser Anordnung sind den Druckschriften DE-A-10 2005 010 583, EP-A-1 473 116 und EP-A-2 014 412 der Anmelderin zu entnehmen, auf welche diesbezüglich zur Vermeidung von Wiederholungen an dieser Stelle ausdrücklich verwiesen wird.

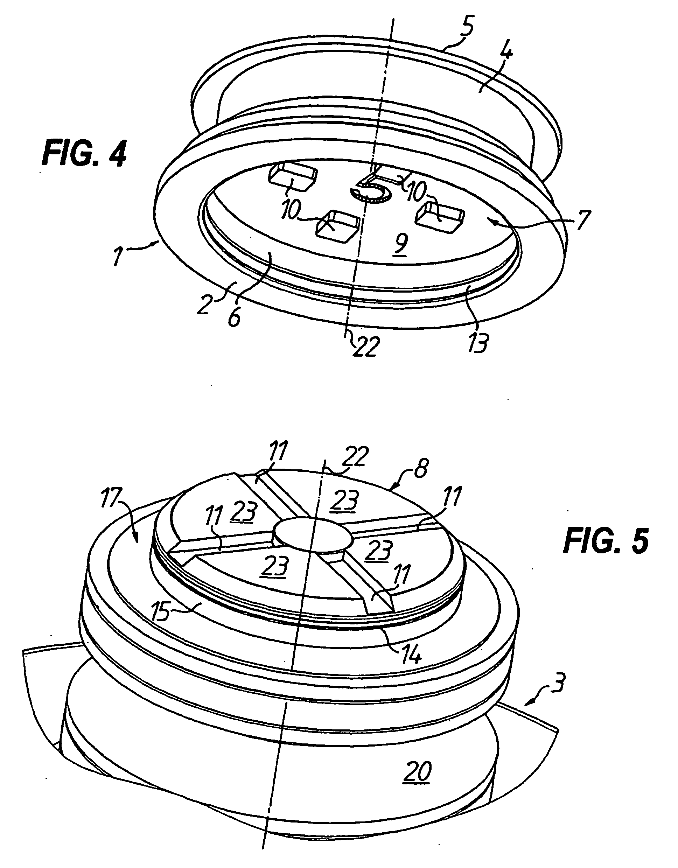

Auf die bevorzugte Ausbildung der Schnittstelle zwischen Polierwerkzeug 1 und Werkzeugspindel 3 zurückkommend, ist insbesondere der Fig. 4 zu entnehmen, dass die an der Grundfläche 9 des Innenraums 7 des Grundkörpers 2 angeordneten Mitnehmerelemente 10 von vier quaderförmigen und in den Abmessungen übereinstimmenden Vorsprüngen gebildet sind. Der Grundkörper 2 mit den Vorsprüngen ist aus einem geeigneten thermoplastischen Kunststoff spritzgeformt. Die Vorsprünge sind bezogen auf die Mittelachse 22 des Grundkörpers 2 mit gegenseitigen Winkelabständen von 90° und in übereinstimmenden Abständen (Teilkreisradius) von der Mittelachse 22 angeordnet. Verschiedene Polierwerkzeuge können hier unterschiedliche Teilkreisradien aufweisen, um sie für die Aufnahme an bestimmten Plätzen eines Werkzeugmagazins (nicht gezeigt) zu indexieren, wobei am jeweiligen Platz des Werkzeugmagazins eine Ringnut mit entsprechendem Teilkreisradius vorgesehen ist.

Wie insbesondere aus Fig. 5 hervorgeht, sind die an der zylindrischen Aufnahme 8 der Werkzeugspindel 3 angeordneten Mitnehmerelemente 11 als vier in einer ebenen Stirnfläche 23 der Aufnahme 8 vorgesehene, in radialer Richtung verlaufende Nuten ausgebildet, deren Breite geringfügig größer ist als die Breite der die Mitnehmerelemente 10 bildenden quaderförmigen Vorsprünge. Bei diesen Nuten handelt es sich um lineare Nuten, die bezüglich der Mittelachse 22 radial verlaufen. Die vier Nuten sind bezüglich der Mittelachse der Aufnahme 8, die mit der Mittelachse 22 des Grundkörpers 2 und damit des Polierwerkzeugs 1 übereinstimmt, mit gegenseitigen Winkelabständen von 90° kreuzförmig angeordnet. Die Nuten sind dazu bestimmt, jeweils einen der vier Vorsprünge des Grundkörpers 2 formschlüssig aufzunehmen, wenn sich Aufnahme 8 und Grundkörper 2 in einer entsprechenden Relativdrehlage zueinander befinden und der Grundkörper 2 einer die Verrastung aufhebenden Axialkraft und einem Drehmoment ausgesetzt ist.

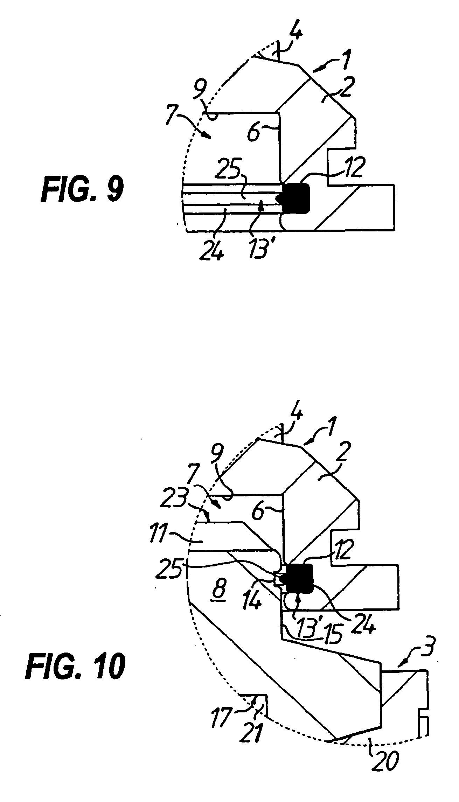

Wie am deutlichsten aus den Fig. 7 und 10 hervorgeht, ist die zur Festlegung des Halterings 13 (bzw. 13') vorgesehene Ringnut 12 in der Wandfläche 6 des Innenraums 7 des Grundkörpers 2 angeordnet und von größerer Tiefe als die in der zylindrischen Umfangsfläche 15 der Aufnahme 8 der Werkzeugspindel 3 vorgesehene Gegennut 14. Dabei sind die Abmessungen so gewählt, dass der Haltering 13 etwas aus der Wandfläche 6 des Innenraums 7 zur dichten Anlage an die zylindrische Umfangsfläche 15 der Aufnahme 8 nach innen vorsteht. Da die Ringnut 12 von größerer Tiefe ist als die Gegennut 14, verbleibt der in die Ringnut 12 eingelegte Haltering 13 auch beim Entfernen des Polierwerkzeugs 1 von der Aufnahme 8 in der Ringnut 12 und damit am Polierwerkzeug 1.

Während die Fig. 1, 4 und 6 bis 8 einen O-Ring als Haltering 13 zeigen, besitzt bei der Variante gemäß den Fig. 9 und 10 der Haltering 13' eine andere Form. Genauer gesagt weist der Haltering 13' einen elastomeren Grundkörper 24 mit einem im Wesentlichen rechteckigen Querschnitt auf, der spielfrei unter Vorspannung in der im Querschnitt gesehen ebenfalls im Wesentlichen rechteckigen Ringnut 12 sitzt. An seiner Innenumfangsfläche ist der Grundkörper 24 des Halterings 13' mit einem umlaufenden, im Querschnitt gesehen im Wesentlichen halbkreisförmigen Wulst 25 für den Eingriff in der Gegennut 14 und zur Abdichtung gegenüber der Aufnahme 8 versehen. Die Abmessungen von Ringnut 12 und Haltering 13' sind hierbei so gewählt, dass der Grundkörper 24 nicht aus der Ringnut 12 über die Wandfläche 6 nach radial innen in den Innenraum 7 des Polierwerkzeugs 1 vorsteht, wohl aber der Wulst 25 des Halterings 13', und zwar soweit, dass er in der in Fig. 8 gezeigten Relativstellung von Polierwerkzeug 1 und Aufnahme 8 mit Vorspannung an der zylindrischen Umfangsfläche 15 der Aufnahme 8 dichtend anliegt.

Das vorgeschlagene Polierwerkzeug umfasst einen Grundkörper mit einem Bearbeitungsabschnitt auf der Außenseite. Innenseitig besitzt der Grundkörper einen offenen Innenraum, mit welchem das Polierwerkzeug auf eine Aufnahme einer Werkzeugspindel passend aufschiebbar ist, und zwar zunächst bis zu einer Verrastungsstellung, in welcher ein in einer Ringnut des Innenraums eingelegter Haltering mit einer Gegennut der Aufnahme eingreift, wodurch das Polierwerkzeug nicht unbeabsichtigt von der Aufnahme abfallen kann. Danach ist das Polierwerkzeug durch den Polierarbeitsdruck weiter auf die Aufnahme unter Aufhebung der Verrastung aufschiebbar, bis unter gleichzeitiger Einwirkung eines Drehmoments Mitnehmerelemente des Grundkörpers mit Mitnehmergegenelementen der Aufnahme zur Drehbewegungsübertragung eingreifen. Der Haltering sorgt zumindest in letzterer Relativstellung zwischen Polierwerkzeug und Werkzeugspindel für eine Abdichtung gegen das Eindringen des abrasiven Poliermittels, so dass die Schnittstelle zwischen Polierwerkzeug und Werkzeugspindel bei einfachem kostengünstigen Aufbau funktionssicher und verschleißarm ist.

### BEZUGSZAHLENLISTE

- 1: Polierwerkzeug
- 2: Grundkörper
- 3: Werkzeugspindel
- 4: Zwischenschicht
- 5: Poliermittelträger
- 6: Wandfläche
- 7: Innenraum
- 8: Aufnahme
- 9: Grundfläche
- 10: Mitnehmerelement
- 11: Mitnehmergegenelement
- 12: Ringnut
- 13, 13': Haltering
- 14: Gegennut
- 15: Umfangsfläche
- 16: Basisteil
- 17: Gelenkteil
- 18: Kugelkopfverbindung
- 19: Führungsglied
- 20: Faltenbalg
- 21: Druckmittelkammer
- 22: Mittelachse
- 23: Stirnfläche
- 24: Grundkörper
- 25: Wulst

## Patentansprüche

1. Polierwerkzeug (1) zur Feinbearbeitung von optisch wirksamen Flächen an insbesondere Brillengläsern, mit einem Grundkörper (2), an dessen Außenseite ein Bearbeitungsabschnitt (4, 5) vorgesehen ist und der an seiner Innenseite einen durch eine wandfläche (6) und eine Grundfläche (9) begrenzten Innenraum (7) aufweist, welcher zum Aufschieben des Polierwerkzeugs (1) auf und Verrasten an einer komplementär ausgebildeten Aufnahme (8) einer Werkzeugspindel (3) vorgesehen ist und an seiner Grundfläche (9) Mitnehmerelemente (10) zur Drehmomentsübertragung besitzt, denen entsprechende Mitnehmergegenelemente (11) an der Aufnahme (8) zugeordnet sind, wobei zwischen der Wandfläche (6) und der Aufnahme (8) ein in einer Ringnut (12) festgelegter Haltering (13, 13') vorgesehen ist, welcher die Verrastung mit einer entsprechenden Gegennut (14) und eine Abdichtung des Innenraums (7) vorsieht, wobei die Verrastung beim Aufschieben eintritt bevor die Mitnehmerelemente (10) mit den Mitnehmergegenelementen (11) in Eingriff gelangen, der erst bei weiterem Aufschieben unter Aufhebung der Verrastung und Abdichtung zwischen der Wandfläche (6) und der Aufnahme (8) erzielbar ist.

2. Polierwerkzeug (1) nach Anspruch 1, wobei die an der Grundfläche (9) des Innenraums (7) des Grundkörpers (2) angeordneten Mitnehmerelemente (10) von vier quaderförmigen und in den Abmessungen übereinstimmenden Vorsprüngen gebildet sind, die bezogen auf eine Mittelachse (22) des Grundkörpers (2) mit gegenseitigen Winkelabständen von 90° und in übereinstimmenden Abständen von der Mittelachse (22) angeordnet sind.

3. Polierwerkzeug (1) nach Anspruch 2, wobei die an der Aufnahme (8) der Werkzeugspindel (3) angeordneten Mitnehmergegenelemente (11) als vier in einer ebenen Stirnfläche (23) der Aufnahme (8) vorgesehene, in radialer Richtung verlaufende Nuten ausgebildet sind, die bezogen auf eine Mittelachse der Aufnahme (8) mit gegenseitigen Winkelabständen von 90° kreuzförmig angeordnet und dazu bestimmt sind, jeweils einen der vier Vorsprünge des Grundkörpers (2) formschlüssig aufzunehmen, wenn sich Aufnahme (8) und Grundkörper (2) in einer entsprechenden Relativdrehlage zueinander befinden und der Grundkörper (2) einer die Verrastung aufhebenden Axialkraft ausgesetzt ist.

4. Polierwerkzeug (1) nach einem der vorhergehenden Ansprüche, wobei die zur Festlegung des Halterings (13, 13') vorgesehene Ringnut (12) in der Wandfläche (6) des Innenraums (7) des Grundkörpers (2) angeordnet und von größerer Tiefe als die in der Aufnahme (8) der Werkzeugspindel (3) vorgesehene Gegennut (14) ist, so dass der Haltering (13, 13') etwas aus der Wandfläche (6) des Innenraums (7) zur dichten Anlage an der Aufnahme (8) nach innen vorsteht.

5. Polierwerkzeug (1) nach einem der vorhergehenden Ansprüche, wobei der Grundkörper (2) aus einem thermoplastischen Kunststoff spritzgeformt ist.

6. Polierwerkzeug (1) nach einem der vorhergehenden Ansprüche, wobei es sich bei dem Haltering (13) um einen O-Ring handelt.

7. Polierwerkzeug (1) nach einem der Ansprüche 1 bis 5, wobei der Haltering (13') einen elastomeren Grundkörper (24) mit einem im Wesentlichen rechteckigen Querschnitt aufweist, der spielfrei unter Vorspannung in der im Querschnitt gesehen im Wesentlichen rechteckigen Ringnut (12) sitzt.

8. Polierwerkzeug (1) nach Anspruch 7, wobei der Grundkörper (24) des Halterings (13') an seiner Innenumfangsfläche mit einem umlaufenden Wulst (25) für den Eingriff in der Gegennut (14) und zur Abdichtung gegenüber der Aufnahme (8) versehen ist.

## Claims

1. Polishing tool (1) for finishing optically effective surfaces of, in particular, spectacle lenses, comprising a base body (2), at the outer side of which a processing section (4, 5) is provided and which has at its inner side an interior space (7), which is bounded by a wall surface (6) and a base surface (9) and which is provided for pushing of the polishing tool (1) onto and detenting with a mount (8) of complementary construction of a tool spindle (3) and has at its base surface (9) entrainer elements (10) for transmission of torque, with which corresponding entrainer counter-elements (11) at the mount (8) are associated, wherein provided between the wall surface (6) and the mount (8) is a retaining ring (13, 13') which is fixed in an annular groove (12) and which provides detenting with a corresponding counter-groove (14) and sealing of the interior space (7), wherein the detenting arises during the pushing-on before the entrainer elements (10) come into engagement with the entrainer counter-elements (11), which engagement is achievable only when further pushing-on is carried out under cancellation of the detenting and sealing between the wall surface (6) and the mount (8).

2. Polishing tool (1) according to claim 1, wherein the entrainer elements (10) arranged at the base surface (9) of the interior space (7) of the base body (2) are formed by four block-shaped projections of corresponding dimensions which with respect to a center axis (22) of the base body (2) are arranged at mutual angular spacings of 90° and at corresponding distances from the center axis (22).

3. Polishing tool (1) according to claim 2, wherein the entrainer counter-elements (11) arranged at the mount (8) of the tool spindle (3) are constructed as four grooves which are provided in a planar end face (23) of the mount (8) and extend in radial direction and which with respect to a center axis of the mount (8) are arranged in cross shape with mutual angular spacings of 90° and are intended for the purpose of each mechanically positively receiving a respective one of the four projections of the base body (2) when the mount (8) and base body (2) are disposed in a corresponding relative rotational position with respect to one another and the base body (2) is subjected to an axial force canceling the detenting.

4. Polishing tool (1) according to any one of the preceding claims, wherein the annular groove (12) provided for fixing the retaining ring (13, 13') is arranged in the wall surface (6) of the interior space (7) of the base body (2) and is of greater depth than the counter-groove (14) provided in the mount (8) of the tool spindle (3) so that the retaining ring (13, 13') protrudes inwardly to some extent from the wall surface (6) of the interior space (7) for sealing contact with the mount (8).

5. Polishing tool (1) according to any one of the preceding claims, wherein the base body (2) is injection-molded from a thermoplastic plastics material.

6. Polishing tool (1) according to any one of the preceding claims, wherein the retaining ring (13) is an O-ring.

7. Polishing tool (1) according to any one of claims 1 to 5, wherein the retaining ring (13') comprises an elastomeric base body (24) with a substantially rectangular cross-section which is seated free of play under bias in the annular groove (12), which is substantially rectangular as seen in cross-section.

8. Polishing tool (1) according to claim 7, wherein the base body (24) of the retaining ring (13') is provided at its inner circumferential surface with an encircling bead (25) for engagement in the counter-groove (14) and for sealing relative to the mount (8).

## Revendications

1. Outil de polissage (1) pour l'usinage de finition de surfaces actives sur le plan optique, notamment sur des verres de lunettes, comprenant un corps de base (2) sur le côté extérieur duquel est prévu un tronçon d'usinage (4, 5) et présentant, sur son côté intérieur, un espace intérieur (7) délimité par une surface de paroi (6) et une surface de fond (9), prévu pour emmancher l'outil de polissage (1) et l'enclencher sur un porte-outil (8) de configuration complémentaire d'une broche porte-outil (3), et qui possède, sur sa surface de fond (9), des éléments entraîneurs (10) pour la transmission de couple, auxquels sont associés des éléments entraîneurs conjugués (11) correspondants sur le porte-outil (8), outil de polissage
dans lequel est prévu, entre la surface de paroi (6) et le porte-outil (8), une bague de retenue (13, 13') fixée dans une rainure annulaire (12) et produisant l'enclenchement avec une rainure conjuguée correspondante (14), et une étanchéité de l'espace intérieur (7), et
dans lequel l'enclenchement se produit pendant l'emmanchement, avant que les éléments entraîneurs (10) viennent engrener avec les éléments entraîneurs conjugués (11), l'engrènement n'étant obtenu qu'après la poursuite de l'emmanchement, l'enclenchement étant interrompu à cette occasion et l'étanchéité assurée entre la surface de paroi (6) et le porte-outil (8).

2. Outil de polissage (1) selon la revendication 1, dans lequel les éléments entraîneurs (10) agencés sur la surface de fond (9) de l'espace intérieur (7) du corps de base (2), sont formés par quatre protubérances de forme parallélépipédique et de dimensions concordantes, qui, par rapport à un axe central (22) du corps de base (2), sont agencées avec des espacements angulaires réciproques de 90° et à des distances concordantes de l'axe central (22).

3. Outil de polissage (1) selon la revendication 2, dans lequel les éléments entraîneurs conjugués (11) agencés sur le porte-outil (8) de la broche porte-outil (3), sont configurés en tant que quatre rainures prévues dans une surface frontale plane (23) du porte-outil (8) et s'étendant dans la direction radiale, qui, par rapport à un axe central du porte-outil (8), sont agencées en forme de croix, avec des espacements angulaires réciproques de 90°, et sont destinées à recevoir chacune, par complémentarité de formes, l'une des quatre protubérances du corps de base (2), lorsque le porte-outil (8) et le corps de base (2) se trouvent dans une position relative de rotation, correspondante, l'un par rapport à l'autre, et lorsque le corps de base (2) est soumis à une force axiale interrompant l'enclenchement.

4. Outil de polissage (1) selon l'une des revendications précédentes, dans lequel la rainure annulaire (12), prévue pour fixer la bague de retenue (13, 13'), est agencée dans la surface de paroi (6) de l'espace intérieur (7) du corps de base (2), et est d'une profondeur plus grande que la rainure conjuguée (14) prévue dans le porte-outil (8) de la broche porte-outil (3), de sorte que la bague de retenue (13, 13') fait légèrement saillie de la surface de paroi (6) de l'espace intérieur (7), vers l'intérieur, pour s'appuyer de manière étanche contre le porte-outil (8).

5. Outil de polissage (1) selon l'une des revendications précédentes, dans lequel le corps de base (2) est moulé par injection en une matière plastique thermoplastique.

6. Outil de polissage (1) selon l'une des revendications précédentes, dans lequel la bague de retenue (13) est un joint torique.

7. Outil de polissage (1) selon l'une des revendications 1 à 5, dans lequel la bague de retenue (13') présente un corps de base (24) en élastomère, avec une section transversale sensiblement rectangulaire, qui est logé sans jeu, sous précontrainte, dans la rainure annulaire (12) sensiblement rectangulaire en ce qui concerne sa section transversale.

8. Outil de polissage (1) selon la revendication 7, dans lequel le corps de base (24) de la bague de retenue (13') est pourvu, sur sa surface périphérique intérieure, d'un bourrelet périphérique (25) destiné à s'engager dans la rainure conjuguée (14) et à assurer l'étanchéité par rapport au porte-outil (8).
